# EUROPEAN PATENT SPECIFICATION

(11) **EP 2 702 917 B1**
(45) Date of publication and mention of the grant of the patent: **02.11.2016**
(21) Application number: 11864415.2
(22) Date of filing: 28.11.2011
(51) Int. Cl.: A47L 9/28, G05D 1/02, A47L 9/00, A47L 11/40

(54) **VACUUM CLEANER**
STAUBSAUGER
ASPIRATEUR ÉLECTRIQUE

(30) Priority: 28.04.2011 JP 2011102245
(43) Date of publication of application: 05.03.2014
(73) Proprietor: Toshiba Lifestyle Products & Services Corporation, Ome-shi, Tokyo 198-8710 (JP)
(72) Inventor: ABE Kouichi, Tokyo 105-8001 (JP); NAITO Junji, Tokyo 105-8001 (JP)
(74) Representative: O'Connell, David Christopher
(86) International application number: PCT/JP2011/077331
(87) International publication number: WO 2012/147230

(56) References cited:
- EP-A1- 1 897 476
- JP-A- 7 008 428
- JP-A- 2005 177 459
- JP-A- 2006 209 644
- JP-A- 2006 209 644
- JP-A- 2007 143 645
- JP-A- 2007 325 701
- JP-U- H0 588 464
- US-A- 5 815 880
- US-A1- 2003 060 928

## Description

### TECHNICAL FIELD

The present invention relates to an electric vacuum cleaner which autonomously travels on and cleans a surface to be cleaned.

### BACKGROUND ART

Conventionally, for example, there has been an electric vacuum cleaner which autonomously travels on and cleans a floor surface to be cleaned while detecting an obstacle with use of a sensor or the like. In such an electric vacuum cleaner, a suction port is formed on a lower part of a main body case which houses an electric blower and includes a dust collecting part, and driving wheels are attached on both sides of the suction port or the like. Thus, no suction port can be provided on both the sides corresponding to the driving wheels, and dust cannot be easily vacuumed which is located on a floor surface on the sides of the main body case. Thereupon, a constitution in which side brushes as a turn cleaning part, which turn on a floor surface and sweep dust into the suction port, are provided on both sides of the lower part of the main body case is known.

However, since the side brushes project downward in relation to the main body case, there is a possibility that the side brushes catch on, for example, a level difference created by a mat such as a carpet laid on a floor surface such as a flooring and an electric vacuum cleaner having this constitution cannot travel (stacks).

### CITATION LIST

### Patent Literature

PTL 1: Japanese Laid-Open Patent Publication No. 2006-106816
PTL 2: Japanese Laid-Open Patent Publication No. 6-125861
PTL 3: Japanese Laid-Open Patent Publication No. 7-322977

US2003/060928 discloses a robotic vacuum cleaner with rotating brush members that are rotatable about horizontal axes. When an obstacle is encountered, the rotating members can be raised to clear the obstacle.

### SUMMARY OF THE INVENTION

### Technical Problem

It is an object of the present invention to provide an electric vacuum cleaner that can prevent an occurrence where the electric vacuum cleaner is unable to travel by a turn cleaning part being caught on an obstacle on a surface to be cleaned.

### Solution to Problem

An electric vacuum cleaner according to an embodiment autonomously travels on and cleans a surface to be cleaned. The electric vacuum cleaner has: a main case body; a dust collection port provided on a lower part of the main body case; a turn cleaning part which includes a cleaning member to be grounded on a surface to be cleaned and is provided in front of the dust collection port on the lower part of the main body case so as to be turnable on the surface to be cleaned; an obstacle detecting unit for detecting whether an obstacle obstructing autonomous traveling is located under the main body case; and a control unit which turns and causes a front side of the turn cleaning part to retreat upward when the obstacle detecting unit detects that an obstacle obstructing autonomous traveling is located under the main body case.

### BRIEF DESCRIPTION OF DRAWINGS

Figs. 1(a) to (c) are explanatory side views showing the sequence states, where a turn cleaning part of an electric vacuum cleaner according to an embodiment is caused to retreat upward.
Fig. 2 is a side view showing the same electric vacuum cleaner.
Fig. 3 is a bottom view showing the same electric vacuum cleaner.
Fig. 4 is a block diagram illustrating the same electric vacuum cleaner.

### EMBODIMENT

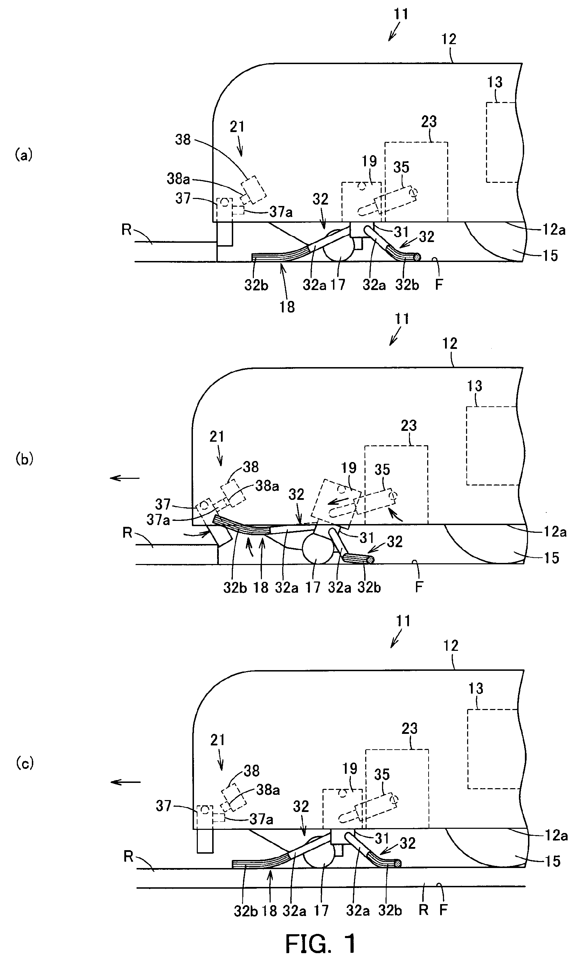

Hereinafter, an embodiment will be described with reference to Figs. 1 to 4.

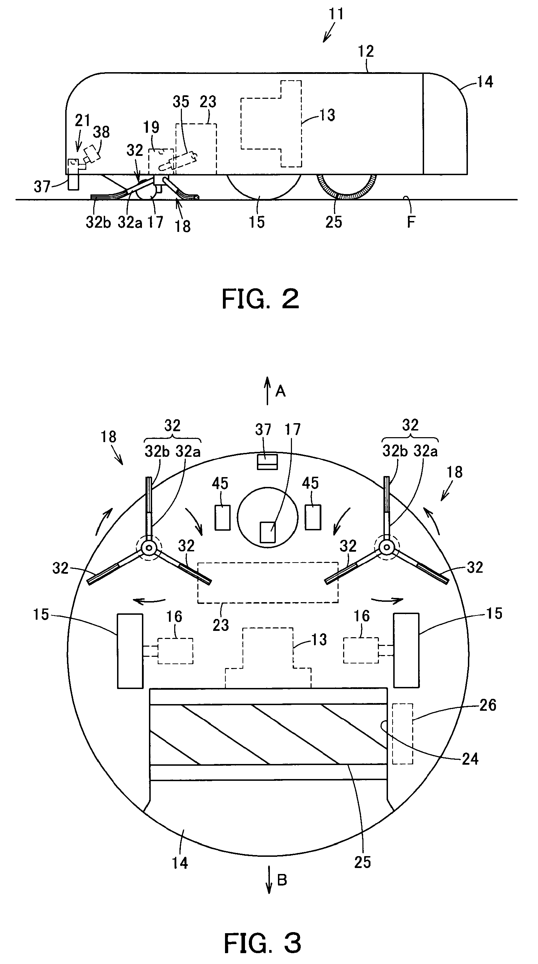

In Figs. 2 and 3, the reference numeral 11 denotes an electric vacuum cleaner. Regarding description of the present embodiment, a so-called self-traveling type robot cleaner, which autonomously travels (self-travels) on and cleans a floor surface F to be cleaned, will be cited as the electric vacuum cleaner 11.

The electric vacuum cleaner 11 includes: a hollow main body case 12; an electric blower 13 housed in the main body case 12; a dust collecting part 14 communicating with a suction side of the electric blower 13 and provided in the main body case 12; for example, a plurality of driving wheels 15 as a driving part for making the electric vacuum cleaner 11 autonomously travel, for autonomous traveling; motors 16 as a driving unit for driving the driving wheels 15; a turn wheel 17 turnably attached to a lower part of the main body case 12; for example, a pair of side brushes 18 as a turn cleaning part which is attached to the lower part of the main body case 12 so as to be turnable on the floor surface F; turn motors 19 as a turn driving unit for driving the side brushes 18; a plurality of sensors 20 as a detecting unit which are attached to the main body case 12; an obstacle detecting unit 21 positioned at the lower part of the main body case 12; a control unit 22 constituted by a circuit board, etc.; and a secondary battery 23 which is a battery serving as a power supply unit.

Moreover, hereinafter, description will be made by assuming a traveling direction of the electric vacuum cleaner 11 (main body case 12) as a longitudinal direction (direction indicated by the arrows A and B in Fig. 3) and assuming a lateral direction (both side direction) orthogonal to the longitudinal direction as a width direction.

The main body case 12 is made of, for example, synthetic resin, and formed in the shape of a flat column (disk) or the like, and a suction port 24 as a dust collection port, which is long in the width direction, laterally long, is opened at a central part in the width direction on a rear side of a circular lower surface 12a. Additionally, various operation panels, displaying part, etc. (not shown) are arranged on an upper part of the main body case 12.

The suction port 24 communicates with the dust collecting part 14. A shaft-shaped rotary brush 25 as a rotary cleaning body is axially supported rotatably on the suction port 24 and is rotationally driven by a rotary motor 26 as a cleaning body driving unit installed in the main body case 12.

In the rotary brush 25, for example, a plurality of cleaning body parts are radially spirally projected in a wall shape and attached on an outer circumferential surface of a long shaft part. A lower side of the rotary brush 25 projects downward from the suction port 24 to the lower surface 12a of the main body case 12, and tip ends of the cleaning body parts positioned on the lower side with the electric vacuum cleaner 11 laid on the floor surface F come into contact with the floor surface F.

The dust collecting part 14 traps dust which is vacuumed from the suction port 24 by driving of the electric blower 13. The dust collecting part 14 may, for example, filtration-trap dust with use of, for example, a dust collecting bag such as a paper pack or a filter, or separate and trap dust by inertia separation such as centrifugal separation (cyclone separation) or linear separation, and can be arbitrarily constituted. Additionally, the dust collecting part 14 is positioned on a rear part of the main body case 12 above the suction port 24 and can be detachable from the main body case 12.

At least a lower part of each driving wheel 15 projects downward from the lower surface 12a of the main body case 12, comes into contact with the floor surface F with the electric vacuum cleaner 11 laid on the floor surface F and is rotatable. Additionally, the driving wheels 15 are positioned, for example, in front of the suction port 24, on both sides of an approximately central part of the main body case 12 in the longitudinal direction, and rotates along the longitudinal direction.

The motors 16 are arranged so as to, for example, respectively correspond to the driving wheels 15, and can respectively make the driving wheels 15 independently drive. The motor 16 may be directly connected to each driving wheel 15, or connected to each driving wheel 15 via a transmitting unit (not shown) such as a gear or a belt.

The turn wheel 17 is positioned at an approximately central part of the main body case 12 in the width direction in the front of the main body case 12 and is a driven wheel turnable along the floor surface F.

Each side brush 18 has a disk-shaped brush base part 31 which is a turn central part as a turn cleaning part base part and, for example, three cleaning bodies 32 which radially project in a radial direction from the brush base part 31 and incline to the floor surface F. The side brushes 18 are attached to the lower surface 12a of the main body case 12 so that the brush base parts 31 each of which is a center of rotation are positioned in front of the suction port 24 and the driving wheels 15 and on both sides behind the turn wheel 17.

The three cleaning bodies 32 are provided and spaced at approximately even intervals from each other in the circumferential direction of each brush base part 31. Moreover, for example, four or more cleaning bodies 32 may be provided.

Each cleaning body 32 includes a shaft part 32a radially projecting from the brush base part 31 and a plurality of brush bristles 32b as a cleaning member put in a tip end of the shaft part 32a. The brush bristle 32b is made of synthetic resin or the like and formed thinner than the shaft part 32a. At least tip ends, in the present embodiment, approximating the whole of the brush bristles 32b of each cleaning body 32 are elastically brought into contact with the floor surface F with the electric vacuum cleaner 11 laid on the floor surface F.

A rotary shaft projecting downward of each turn motor 19 is connected to each brush base part 31, and the turn motors 19 can respectively rotate the side brushes 18 to the central side of main body case 12 in the width direction, that is, rotate the right side brush 18 counterclockwise and the left side brush 18 clockwise so that dust is swept into the suction port 24 side by each side brush 18. An upper end side of each turn motor 19 is axially supported on the main body case 12 so that the turn motor 19 can turn integrally with side brush 18 in the longitudinal direction (a vertical direction). A tip end side of a telescopic actuator 35 is connected to the vicinity of a central part of each turn motor 19 in the vertical direction. The actuator 35 is, for example, an electric cylinder, a base end side thereof is pivotally supported on the main body case 12 so as to be vertically turnable, and the tip end side thereof is axially supported on the turn motor 19 so as to be vertically turnable.

The sensor 20 is, for example, a ranging sensor such as an ultrasonic sensor or infrared sensor, or a contact sensor which serves as a bumper by directly coming into contact with an obstacle. The sensor 20 is arranged on a front part, side part or lower part of the main body case 12, and can detect an obstacle (wall) in front of and to the side of the main body case 12 or an obstacle (level difference) under the main body case 12 and can measure the distance between the main body case 12 and the obstacle.

The obstacle detecting unit 21 detects whether an obstacle obstructing autonomous traveling, for example, a mat R as an obstacle such as a carpet or a straw mat, is located under the main body case 12. Although the obstacle detecting unit 21 can be arbitrarily constituted, in the present embodiment, as shown in Figs. 1 and 2, it includes a lever-shaped turn body 37 arranged on the lower surface 12a of the main body case 12 and a microswitch 38 as a switch arranged behind the turn body 37 on the main body case 12, and is arranged in front of the turn wheel 17 at the center of the main body case 12 in the lateral width direction.

The turn body 37 is an obstacle sensing part (mat sensing part) and arranged turnably in the longitudinal direction in relation to the main body case 12 and has a projecting part 37a at its rear part, the microswitch 38 side. The turn body 37 is positioned in front of the base part 31 and a tip end (of the brush bristle 32b) of the cleaning body 32, which is positioned at the extreme front, of each side brush 18, and a lower end side, which is a tip end side, of the turn body 37 projects downward from the lower surface 12a of the main body case 12 in a normal state (non-load state). The amount of projection of the lower end, which is the tip end, of the turn body 37 from the lower surface 12a of the main body case 12 is set so as to be larger than that of projection of the brush base part 31 of each side brush 18 from the lower surface 12a of the main body case 12, and the sensitivity of the obstacle detecting unit 21 is set in accordance with the amount of projection of the lower end of the turn body 37 from the lower surface 12a of the main body case 12. That is, as the amount of projection of the lower end of the turn body 37 from the lower surface 12a of the main body case 12 is larger, a thinner mat R can be detected. The amount of projection is properly set in accordance with the thickness of a mat R which is required to be detected.

The microswitch 38 is, for example, a constantly opened or constantly closed switch having a button-shaped switching part 38a projected to a front lower side, to the turn body 37 side, and is set to be, for example, switched on/off (closed/opened) only while the switching part 38a is pressed by the proj ecting part 37 a, which is pressed relatively backward and turned by coming into contact with the mat R, of the turn body 37.

The turn body 37 is turned backward by coming into contact with a mat R projecting between the lower surface 12a of the main body case 12 and the floor surface F, the microswitch 38 is switched on/off, and thus the obstacle detecting unit 21 detects whether an obstacle such as a carpet or a straw mat obstructing the autonomous traveling is located under the main body case 12.

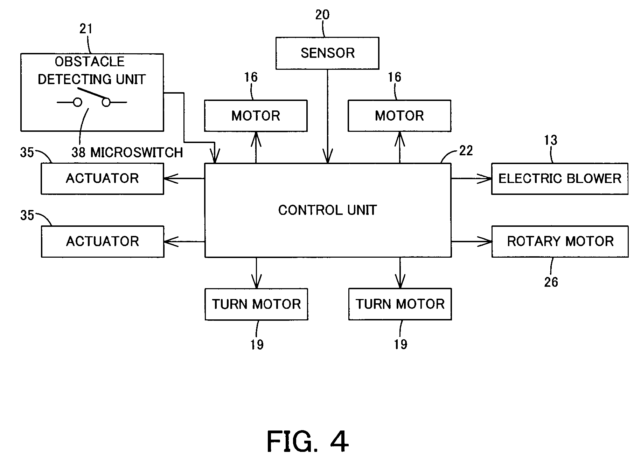

The control unit 22 includes, for example, a storing unit such as a memory and a control part such as a microcomputer. As shown in Fig. 4, the control unit 22 is electrically connected to the electric blower 13, the rotary motor 26, each motor 16, each turn motor 19, the sensors 20, the obstacle detecting unit 21 (microswitch 38), and the actuator 35, etc., and can control driving of the electric blower 13, the rotary motor 26, each motor 16, each turn motor 19, etc. , based on detection results by the sensors 20 and the obstacle detecting unit 21 (microswitch 38).

The secondary battery 23 shown in Figs. 2 and 3 supplies power to each part shown in Fig. 4, the control unit 22, the electric blower 13, the rotary motor 26, each motor 16, each turn motor 19, and the sensors 20, etc. The secondary battery 23 is arranged, for example, behind the turn wheel 17. The secondary battery 23 is electrically connected to charging terminals 45 and 45 positioned on both sides of the turn wheel 17 on the lower surface 12a of the main body case 12 and can be charged in a manner that the charging terminals 45 and 45 are connected to, for example, a predetermined charging table (not shown) set up at a predetermined position in a room.

Next, operation of the embodiment will be described.

The electric vacuum cleaner 11 drives the electric blower 13 at, for example, the predetermined time preset to the control unit 22 and starts cleaning from, for example, a charging table. Moreover, a starting position of cleaning can be arbitrarily set to any position, for example, a traveling start position of the electric vacuum cleaner 11, an entrance of a room, or the like.

The electric vacuum cleaner 11 autonomously travels on the floor surface F in a manner that the control unit 22 rotationally drives the motors 16 and 16 to rotate the driving wheels 15 and 15. The control unit 22 here monitors the position and a traveling state of the electric vacuum cleaner 11 by measuring the distance between the cleaner and a peripheral obstacle via the sensors 20. The electric vacuum cleaner 11 travels on the floor surface F while avoiding obstacles in accordance with measurement by the sensors 20 and vacuums dust on the floor surface F and air into the suction port 24 to which negative pressure is applied via the dust collecting part 14, the negative pressure being generated by driving of the electric blower 13.

Simultaneously, the control unit 22 properly drives the rotary motor 26 and the turn motors 19 and 19, and thus rotates the rotary brush 25 along the floor surface F and turns the side brushes 18 and 18 on the floor surface F. Thus, dust getting into the floor surface F is scraped off by the cleaning body parts of the rotary brush 25, the brush bristles 32b of each side brush 18 and the like, is swept up to the center side of the main body case 12 in the width direction, suction port 24 side, and vacuumed through the suction port 24.

Dust vacuumed through the suction port 24 together with air is separated and trapped by the dust collecting part 14. Air remaining after separation of dust is vacuumed to the electric blower 13, cools the electric blower 13 and is then exhausted, as exhaust air, outward from the main body case 12.

When, as shown in Fig. 1(a), the mat R is located under the main body case 12 in autonomous traveling of the electric vacuum cleaner 11, the mat R comes into contact with a front part of the turn body 37 of the obstacle detecting unit 21. When the electric vacuum cleaner 11 further advances, as shown in Fig. 1(b), the turn body 37 turns backward, the projecting part 37a of the turn body 37 presses against the switching part 38a of the microswitch 38 and the microswitch 38 is switched on/off. In other words, the mat R, which is an obstacle located under the main body case 12, is detected by the obstacle detecting unit 21. The control unit 22, by switching on/off of the microswitch 38, determines that the mat R is located in front of and under the main body case 12 (electric vacuum cleaner 11), and drives and stretches each actuator 35. A lower end side of each turnmotor 19 gradually turns forward integrally with each side brush 18 with stretching of the actuators 35, the distance between each turn motor 19 and the base end side of each actuator 35 gradually changes with the above turn, and thus the tip end side of each actuator 35 connected to each turn motor 19 gradually turns upward. Thus, a front part of each side brush 18 turns upward integrally with each turn motor 19 and retreats upward in relation to the mat R, and each side brush 18 is prevented from catching on the mat R. Here, each turn motor 19 and each side brush 18 turns so that the tip end sides of the brush bristles 32b positioned at the front side are higher than the lower surface 12a of the main body case 12. When the electric vacuum cleaner 11 further advances and each driving wheel 15 rides on the mat R, the turn body 37 turned backward by the mat R is turned forward again, the projecting part 37a of the turn body 37 is spaced from the switching part 38a of the microswitch 38 and thus the microswitch 38 is switched on/off again. Accordingly, since the obstacle detecting unit 21 does not detect the mat R located under the main body case 12, as shown in Fig. 1(c), the control unit 22, for continuation of cleaning, contracts each actuator 35 and turns the front part of each side brush 18 downward integrally with each turn motor 19 again.

When it is determined that cleaning of the whole of the floor surface F to be cleaned is finished, the control unit 22 makes the electric vacuum cleaner 11 autonomously travel to a position of the charging table, stops the electric blower 13, the motors 19 and 26, etc. , connects the charging terminals 45 and 45 (physically and electrically) to the charging table, stops the motors 16 and 16 and finishes driving of the cleaner, and the secondary battery 23 is charged.

According to the embodiment described above, since each side brush 18 is caused to retreat upward when the obstacle detecting unit 21 positioned in front of the suction port 24 detects that the mat R obstructing the autonomous traveling is located under the main body case 12, it can be prevented that (the brush bristles 32b of) the side brush 18 positioned on the lower part catches on the mat R by further advancing of the electric vacuum cleaner 11 and a state in which the electric vacuum cleaner 11 cannot travel (stacks) can be prevented, and cleaning during the autonomous traveling can be continued.

Specifically, when the obstacle detecting unit 21 detects that the mat R obstructing the autonomous traveling is located under the main body case 12, the control unit 22 turns and causes the front side of each side brush 18 to retreat upward by stretching each actuator 35, lifts up and reliably causes the front side to retreat, which especially easily catches on the mat R by advancing of the electric vacuum cleaner 11, of each side brush 18 from the mat R, and can reliably prevent catching.

When the obstacle detecting unit 21 detects the mat R obstructing the autonomous traveling is located under the main body case 12, the control unit 22 turns the front side of each side brush 18, the tip end sides of the brush bristles 32b positioned at the front side, to a position higher than the lower surface 12a of the main body case 12. Thus, the side brush 18 canbe reliably prevented from catching on, for example, a thick mat R, and a situation can be reliably avoided that the electric vacuum cleaner 11 cannot travel (stacks).

Since the obstacle detecting unit 21 includes the turn body 37 which is projected on the lower part of the main body case 12 in front of the suction port 24 and turnable in the longitudinal direction and the microswitch 38 which is positioned behind the turn body 37 and switched on/off with the turn body 37 turned backward and the control unit 22, by switching on/off of the microswitch 38, detects the mat R located under the main body case 12, the obstacle detecting unit 21 capable of detecting the mat R and lifting-up of the mat R can be easily mechanically constituted. Accordingly, an expensive sensor or the like is not required to be used and manufacturing costs can be suppressed.

Moreover, in the embodiment, an obstacle to be detected by the obstacle detecting unit 21 is not limited to the mat R.

The obstacle detecting unit 21 may be arranged, for example, in front of each side brush 18, and it is not limited to the constitution in which the obstacle detecting unit 21 is arranged on the lower part of the main body case 12, for example, the obstacle detecting unit 21 may be arranged on the side of the main body case 12.

Although the control unit 22 includes the following integral functions: a function of controlling rotational driving of the driving wheels 15 and 15 via the motors 16 and 16 and of retreating the side brushes 18 and 18 upward via the turn motors 19 and 19 by making the actuators 35 and 35 telescope; a function of controlling rotation of the side brushes 18 and 18 via the turn motors 19 and 19; a function of controlling driving of the electric blower 13; and a function of controlling rotational driving of the rotary brush 25 via the rotarymotor 26, these functions may be separately provided.

The control unit 22, as long as it can cause each side brush 18 to retreat upward, may not only turn each side brush 18 but, for example, directly move the brush in the vertical direction.

Any cleaning member can be used for each side brush 18. In place of the brush bristles 32b, for example, a blade body extending in a strip shape or a combination of the brush bristles and the blade body can be used as a cleaning member.

If one side brush 18 is arranged on at least one side in front of the suction port 24 on the main body case 12, the same operation and effect as that of the above embodiment can be obtained.

In place of the electric blower 13, a constitution may be provided that sweeps up dust on the floor surface F by the rotary brush 25 and collects it to the dust collecting part 14.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the invention. The accompanying claims and their equivalents are intended to cover such forms or modifications as would fall within the scope of the invention.

## Claims

1. An electric vacuum cleaner (11) which autonomously travels on and cleans a surface (F) to be cleaned, the electric vacuum cleaner (11) comprising:
a main body case (12);
a dust collection port (24) provided on a lower part of the main body case (12);
a turn cleaning part (18) which includes a cleaning member (32b) to be grounded on the surface (F) to be cleaned and is provided in front of the dust collection port (24) on the lower part of the main body case (12) so as to be turnable on the surface (F) to be cleaned;
an obstacle detecting unit (21) for detecting whether an obstacle (R) obstructing autonomous traveling is located under the main body case (12); and
a control unit (22) for causing the turn cleaning part (18) to retreat upward when the obstacle detecting unit (21) detects an obstacle (R) obstructing autonomous traveling is located under the main body case (12),
**characterized in that** the control unit (22) turns and causes a front side of the turn cleaning part (18) to retreat upward when the obstacle detecting unit (21) detects that an obstacle (R) obstructing autonomous traveling is located under the main body case (12).

2. The electric vacuum cleaner according to claim 1,
wherein at least part of the obstacle detecting unit (21) is projected downward in relation to the main body case (12), and
the control unit (22) turns the front side of the turn cleaning part (18) to a position higher than a lower surface of the main body case when the obstacle detecting unit (21) detects that an obstacle (R) obstructing autonomous traveling is located under the main body case (12).

3. The electric vacuum cleaner according to any one of claims 1 to 2,
wherein the obstacle detecting unit (21) includes a turn body (37) which is projected on the lower part of the main body case (12) in front of the dust collection port (24) and turnable in a longitudinal direction and a switch (38) which is positioned behind the turn body (37) and switched on/off with the turn body (37) turned backward, and
the control unit (22), by switching on/off of the switch, detects an obstacle (R) located under the main body case (12).

## Patentansprüche

1. Elektrischer Staubsauger (11), der sich autonom fortbewegt und eine zu säubernde Oberfläche (F) säubert, der elektrische Staubsauger (11) umfassend
ein Hauptkörpergehäuse (12);
einen Staubaufnahmestutzen (24), bereitgestellt an einem unteren Teil des Hauptkörpergehäuses (12);
ein Drehsäuberungsteil (18), das einen auf der zu säubernden Oberfläche (F) niederzulegenden Säuberungsabschnitt (32b) aufweist und vor dem Staubaufnahmestutzen (24) am unteren Teil des Hauptkörpergehäuses (12) bereitgestellt wird, so dass es drehbar auf der zu säubernden Oberfläche (F) ist;
eine Hinderniserfassungseinheit (21) zum Erfassen, ob ein die autonome Fortbewegung versperrendes Hindernis (R) sich unter dem Hauptkörpergehäuse (12) befindet; und
eine Steuereinheit (22) zum Auslösen, dass sich das Drehsäuberungsteil (18) nach oben zurückzieht, wenn die Hinderniserfassungseinheit (21) erfasst, dass ein die autonome Fortbewegung versperrendes Hindernis (R) sich unter dem Hauptkörpergehäuse (12) befindet,
**dadurch gekennzeichnet, dass** sich die Steuereinheit (22) dreht und auslöst, dass eine Vorderseite des Drehsäuberungsteils (18) sich nach oben zurückzieht, wenn die Hinderniserfassungseinheit (21) erfasst, dass ein die autonome Fortbewegung versperrendes Hindernis (R) sich unter dem Hauptkörpergehäuse (12) befindet.

2. Elektrischer Staubsauger gemäß Anspruch 1,
wobei mindestens ein Teil der Hinderniserfassungseinheit (21) gegenüber dem Hauptkörpergehäuse (12) nach unten projiziert ist, und
die Steuereinheit (22) die Vorderseite des Drehsäuberungsteils (18) in eine Stellung dreht, höher als eine untere Oberfläche des Hauptkörpergehäuses, wenn die Hinderniserfassungseinheit (21) erfasst, dass ein die autonome Fortbewegung versperrendes Hindernis (R) sich unter dem Hauptkörpergehäuse (12) befindet.

3. Elektrischer Staubsauger gemäß irgendeinem der Ansprüche 1 bis 2,
wobei die Hinderniserfassungseinheit (21) einen Drehkörper (37) aufweist, der an der Unterseite des Hauptkörpergehäuses (12) vor dem Staubaufnahmestutzen (24) nach unten projiziert ist und in eine Längsrichtung drehbar ist, und einen Schalter (38), der hinter dem Drehkörper (37) angeordnet ist und an-/ausgeschaltet ist, wenn der Drehkörper nach hinten gedreht ist, und
die Steuereinheit (22) durch An-/Ausschalten des Schalters, ein unter dem Hauptkörpergehäuse (12) befindliches Hindernis (R) erfasst.

## Revendications

1. Un aspirateur électrique (11) qui se déplace de façon autonome et nettoie une surface (F) à nettoyer, l'aspirateur électrique (11) comprenant :
un boîtier de corps principal (12) ;
un orifice de collecte de poussière (24) situé sur une partie inférieure du boîtier de corps principal (12) ;
une partie de nettoyage tournante (18) comprenant un élément de nettoyage (32b) qui doit être mis en contact avec la surface (F) à nettoyer et qui est situé devant l'orifice de collecte de poussière (24) sur la partie inférieure du boîtier de corps principal (12) de manière à ce qu'il puisse tourner sur la surface (F) à nettoyer ;
une unité de détection d'obstacles (21) qui sert à détecter si un obstacle (R) obs-truant le déplacement autonome est situé sous le boîtier de corps principal (12) ; et
une unité de contrôle (22) qui provoque le retrait vers le haut de la partie de net-toyage tournante (18) lorsque l'unité de détection d'obstacles (21) détecte qu'un obs-tacle (R) obstruant le déplacement autonome est situé sous le boîtier de corps princi-pal (12),
**caractérisé en ce que** l'unité de contrôle (22) tourne et provoque le retrait vers le haut d'une face avant de la partie de nettoyage tournante (18) lorsque l'unité de détec-tion d'obstacles (21) détecte qu'un obstacle (R) obstruant le déplacement autonome est situé sous le boîtier de corps principal (12).

2. L'aspirateur électrique selon la revendication 1,
dans lequel au moins une partie de l'unité de détection d'obstacles (21) saille vers le bas par rapport au boîtier de corps principal (12), et
l'unité de contrôle (22) tourne la face avant de la partie de nettoyage tournante (18) dans une position plus haute qu'une surface basse du boîtier de corps princi-pal lorsque l'unité de détection d'obstacles (21) détecte qu'un obstacle (R) obstruant le déplacement autonome est situé sous le boîtier de corps principal (12).

3. L'aspirateur électrique selon n'importe laquelle des revendications 1 à 2,
dans lequel l'unité de détection d'obstacles (21) comprend un corps tournant (37) qui saille sur la partie inférieure du boîtier de corps principal (12) devant l'orifice de col-lecte de poussière (24) et pouvant tourner dans une direction longitudinale, ainsi qu'un bouton électrique (38) positionné derrière le corps tournant (37) et allumé/éteint avec le corps tournant (37) tourné vers l'arrière, et
l'unité de contrôle (22), en allumant/éteignant le bouton, détecte un obstacle (R) situé sous le boîtier de corps principal (12).
